# FASCICULE DE BREVET EUROPEEN

(11) **EP 1 378 695 B1**
(45) Date de publication et mention de la délivrance du brevet: **27.02.2008**
(21) Numéro de dépôt: 03291658.7
(22) Date de dépôt: 04.07.2003
(51) Int. Cl.: F16L 3/137, F16L 3/233

(54) **Collier de serrage**
Rohrschelle
Clamping band

(30) Priorité: 05.07.2002 FR 0208429
(43) Date de publication de la demande: 07.01.2004
(73) Titulaire: Ligarex, 78180 Montigny le Bretonneux (FR)
(72) Inventeur: Carmignon Taborin, Sophie Dominique, 92190 Meudon (FR)
(74) Mandataire: Fosse, Danièle

(56) Documents cités:
- CH-A- 172 150
- FR-A- 2 072 322
- FR-A- 2 685 433
- US-A- 2 249 764
- US-A- 5 261 145
- US-A- 6 085 394

## Description

La présente invention concerne un collier de serrage pour tuyau, câble ou similaire, constitué d'une bande métallique dont une extrémité repliée est engagée dans l'ouverture d'une pièce métallique également pourvue d'un oeilleton, l'autre extrémité de la bande étant également engageable dans l'ouverture de la pièce métallique pour l'immobilisation de la bande lors du serrage.

De tels colliers de serrage sont connus de CH-A-172 150 et FR-A-2 685 433. Ils sont utilisés, en particulier sur des gaines de câble tels que ceux renfermant une pluralité de fils électriques ou autres. La gaine est généralement constituée en un matériau synthétique résistant à l'usure et aux coupures tout en présentant un caractère doux pour ne pas abîmer les fils qu'il renferme.

Lors de la pose du collier, l'extrémité pourvue de la pièce métallique est mise en appui sur la gaine, on enroule la bande métallique autour de la gaine, soit par un seul tour soit, plus généralement, par deux tours, et on immobilise l'extrémité libre de la bande dans la pièce métallique, puis on serre à l'aide d'un outil tel qu'une pince pour ligature.

Dans le cas des câbles de gros diamètres, l'extrémité de la gaine présente une forme légèrement évasée vers l'extérieur suite à la coupe du câble pour le fixer dans une armoire électrique par exemple ou parce qu'on souhaite insérer une bague avec tresse de mise à la terre (protection parafoudre).

Lorsqu'on procède à un montage du collier en réalisant un tour de collier, lors du serrage, l'ensemble du collier a tendance à se déplacer axialement vers le plus petit diamètre de la partie conique du câble.

Lors d'un montage réalisé avec deux tours, le premier tour se déplace alors latéralement lors du serrage, ce qui conduit à un montage insatisfaisant et à une possibilité de déplacement ultérieur du collier.

On connaît par US-A-6 085 394 un manchon d'accouplement destiné à abouter des tubes d'isolation en mousse autour de tuyauteries. Ce manchon comporte un dispositif central de languettes découpées de manière à faire saillie et qui, après enroulement se logent dans les découpes correspondantes. Les deux rangées de dispositif de retenue sont continues sur l'ensemble de la longueur développée du manchon et sont ménagées de manière à pénétrer par déchirure la mousse d'isolation pour s'ancrer dedans. Un tel dispositif de retenue ne peut être utiliser sur des câbles tels que ceux pour lesquels un collier de serrage est destiné. En effet, le câble renfermant de fils électrique ne doit pas être endommagé, la gaine dudit câble doit servir à protéger les fils et ne doit surtout pas être coupée ou endommagée.

La présente invention a donc pour but de pallier les inconvénients mentionnés ci-dessus en proposant un collier de serrage dont la mise en place est facilitée sans pour autant endommager la gaine dudit câble.

A cet effet, l'invention a pour objet un collier de serrage pour tuyaux, câbles ou similaires, constitué d'une bande métallique dont une extrémité repliée est engagée dans l'ouverture d'une pièce métallique telle qu'une boucle éventuellement pourvue d'un oeilleton, l'autre extrémité de la bande étant également engageable dans l'ouverture de la pièce métallique pour la ligature de la bande lors du serrage du collier, caractérisé en ce que l'extrémité de la bande métallique pourvue de la pièce métallique, est pourvue, sur sa face venant en appui sur la périphérie extérieure d'un tuyau, un câble ou similaire, d'au moins un picot obtenu par déformation de la bande métallique sans crevée de celle-ci, permettant la retenue de la bande sur ladite périphérie extérieure.

Ainsi de manière avantageuse, lors de la mise en place du collier de serrage autour d'un tuyau, câble ou similaire, le ou les picots de la bande empêchent celle-ci de glisser avant serrage. En effet, les picots qui sont obtenus par emboutissage sans crevée de la bande sont de forme non intrusive et permettent la retenue du collier sur la bande par simple déformation réversible superficielle de la surface de la gaine à serrer sans endommager ladite gaine.

De préférence, la déformation de la bande métallique pour former un picot est obtenue par emboutissage ou estampage.

Les picots de retenue tels que précédemment décrits permettent un ancrage de la bande sur la gaine du câble à serrer et empêchent un glissement du collier qui pourrait conduire à un mauvais serrage. De plus, ces picots sont réalisés de telle sorte que la retenue sur le câble se fait dans toutes les directions.

De préférence, l'extrémité libre de la bande métallique comporte au moins un moyen de retenue de ladite extrémité libre dans la pièce métallique montée à l'autre extrémité de la bande.

Ainsi, lorsque l'utilisateur a fini d'enrouler la bande métallique autour du câble, il peut engager l'extrémité libre dans la pièce métallique et lâcher le collier de serrage pour prendre sa pince pour serrer l'ensemble. De manière avantageuse, le picot de retenue retient l'extrémité libre de la bande dans la pièce métallique.

De préférence, un moyen de retenue est également formé d'une languette obtenue par découpe dans la bande, la languette étant repliée pour faire saillie sur la face de la bande opposée à la face d'appui de celle-ci.

On décrira maintenant l'invention plus en détail en référence au dessin dans lequel :

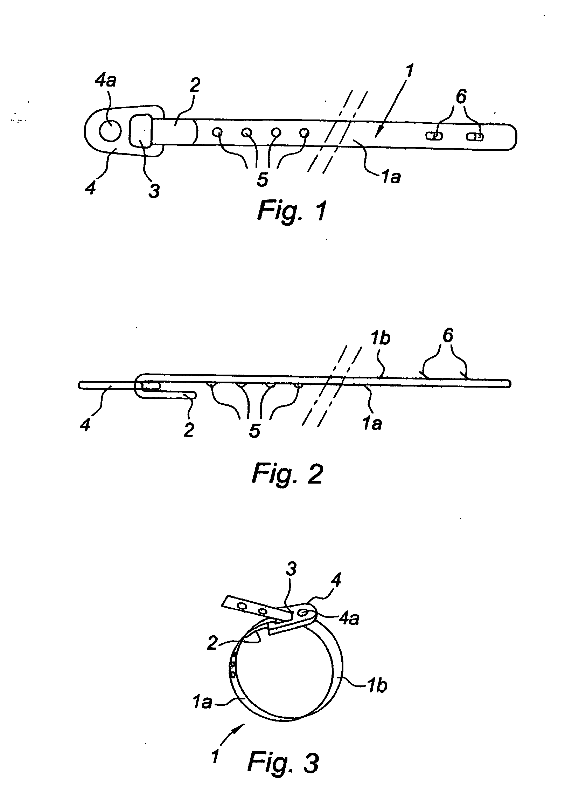

La figure 1 représente une vue du dessus d'un collier de serrage selon l'invention ;
La figure 2 représente une vue latérale du collier selon la figure 1 ; et
La figure 3 représente une vue latérale du collier de la figure 1 en position de serrage provisoire.

Le collier de serrage selon l'invention est constitué d'une bande métallique 1 dont l'une des extrémités est repliée en 2 après avoir été engagée dans l'ouverture 3 d'une pièce métallique 4 telle qu'une boucle éventuellement pourvue d'un oeilleton 4a.

L'extrémité libre de la bande métallique 1 est engageable également à travers l'ouverture 3 pour serrer le collier.

L'extrémité de la bande métallique 1 pourvue de la boucle 4 est destinée à venir en appui en premier sur la gaine d'un câble, l'extrémité libre de la bande 1 s'enroulant autour du câble, une ou plusieurs fois avant d'être engagée dans l'ouverture 3 de la boucle 4.

De manière à empêcher le glissement de la bande 4, l'extrémité de la bande pourvue de la boucle 4 présente des picots de retenue 5 de cette bande 1 sur la gaine.

Ces picots 5 sont ménagés par emboutissage de manière à venir en saillie sur la face 1 a de la bande 1 destinée à être en appui sur la gaine.

L'extrémité libre de la bande 1 présente des moyens de retenue de ladite extrémité libre lorsque celle-ci est engagée dans l'ouverture 3 de la boucle 4. Ces moyens de retenue sont constitués de languettes 6.

Ces languettes 6 sont obtenues par découpe de la bande et sont repliées pour venir en saillie sur la face 1b de la bande 1 opposée à la face 1a dans laquelle les picots 5 sont en saillie.

Tous autres moyens de retenue sont également envisageables dans le cadre de la présente invention.

## Revendications

1. Collier de serrage pour tuyaux, câbles ou similaires, constitué d'une bande métallique (1) dont une extrémité repliée (2) est engagée dans l'ouverture (3) d'une pièce métallique (4) telle qu'une boucle éventuellement pourvue d'un oeilleton (4a), l'autre extrémité de la bande (1) étant également engageable dans l'ouverture (3) de la pièce métallique (4) pour la ligature de la bande (1) lors du serrage du collier,
**caractérisé en ce que** l'extrémité de la bande métallique (1) pourvue de la pièce métallique (4), est pourvue, sur sa face (1a) venant en appui sur la périphérie extérieure d'un tuyau, un câble ou similaire, d'au moins un picot (5) obtenu par déformation de la bande métallique (1) sans crevée de celle-ci, permettant la retenue de la bande (1) sur ladite périphérie extérieure.

2. Collier selon la revendication 1,
**caractérisé en ce que** la déformation de la bande métallique (1) pour former un picot (5) est obtenue par emboutissage ou estampage de ladite bande (1).

3. Collier selon l'une des revendications 1 et 2,
**caractérisé en ce que** l'extrémité libre de la bande métallique (1) comporte au moins un moyen de retenue (6) de ladite extrémité libre dans la pièce métallique (4) montée à l'autre extrémité de la bande (1).

4. Collier selon la revendication 3,
**caractérisé en ce qu**'un moyen de retenue est formé d'une languette (6) obtenue par découpe dans la bande (1), la languette (6) étant repliée pour faire saillie sur la face (1 b) de la bande (1) opposée à la face d'appui (1 a) de celle-ci.

## Claims

1. Clamp collar for pipes, cables or the like, constituted by a metal strip (1) whereof one folded end (2) is engaged in the opening (3) in a metal component (4) such as a buckle possibly provided with an eyelet (4a), the other end of the strip (1) also being able to be engaged in the opening (3) of the metal component (4) so as to lash the strip (1) when the collar is tightened, **characterised in that** the end of the metal strip (1) provided with the metal component (4) is provided, on the face (1a) thereof which is seated on the outer periphery of a pipe, cable or the like, with at least one spike (5) obtained by deforming the metal strip (1) without bursting it, enabling the strip (1) to be held against said outer periphery.

2. Collar according to claim 1, **characterised in that** the metal strip (1) is deformed so as to form a spike (5) by swaging or die-stamping said strip (1).

3. Collar according to claims 1 and 2, **characterised in that** the free end of the metal strip (1) comprises at least one means (6) for holding said free end in the metal component (4) mounted at the other end of the strip (1).

4. Collar according to claim 3, **characterised in that** a holding means is formed of a tongue (6) obtained by being cut out of the strip (1), the tongue (6) being folded back so as to project over the surface (1b) of the strip (1) opposite the seat face (1a) thereof.

## Patentansprüche

1. Klemmschelle für Rohre, Kabel oder dergleichen, bestehend aus einem Metallband (1), dessen eines umgebogenes Ende (2) in die Öffnung (3) eines Metallteiles (4), beispielsweise einer Öse, gesteckt ist, die gegebenenfalls mit einer Blende (4a) versehen ist, wobei das andere Ende des Metallbandes (1) ebenfalls in die Öffnung (3) des Metallteiles (4) einsteckbar ist, um das Metallband (1) beim Festziehen der Schelle zu verbinden, **dadurch gekennzeichnet, dass** das mit dem Metallteil (4) versehene Ende des Metallbandes (1) an seiner am äußeren Umfang eines Rohres, Kabels oder dergleichen anliegenden Seite (1a) mit mindestens einem Buckel (5) versehen ist, der durch Umformung des Metallbandes (1) ohne Durchlöcherung des Metallbandes gebildet ist und das Festhalten des Metallbandes (1) an dem äußeren Umfang ermöglicht.

2. Schelle nach Anspruch 1, **dadurch gekennzeichnet, dass** die Umformung des Metallbandes (1) für das Ausformen eines Buckels (5) durch Tiefziehen oder Prägen des Metallbandes (1) gebildet ist.

3. Schelle nach einem der Ansprüche 1 und 2, **dadurch gekennzeichnet, dass** das freie Ende des Metallbandes (1) mindestens ein Haltemittel (6) zum Festhalten des freien Endes in dem an dem anderen Ende des Metallbandes (1) angebrachten Metallteils (4) aufweist.

4. Schelle nach Anspruch 3, **dadurch gekennzeichnet, dass** ein Haltemittel von einer Lasche (6) gebildet ist, die durch Ausstanzen aus dem Metallband (1) erhalten ist, wobei die Lasche (6) umgebogen ist, um auf der der Anlagefläche (1a) des Metallbandes (1) gegenüber liegenden Seite (1b) des Metallbandes (1) hervorzustehen.
